Europäisches Patentamt

**European Patent Office**

**Office européen des brevets**

(19)

(11) Numéro de publication: **0 156 661**
**B1**

(12) # FASCICULE DE BREVET EUROPÉEN

(45) Date de publication du fascicule du brevet:
**03.02.88**

(51) Int. Cl.⁴: **G 01 M 10/00**

(21) Numéro de dépôt: **85400200.3**

(22) Date de dépôt: **07.02.85**

(54) **Dispositif d'essais hydrodynamiques.**

(30) Priorité: **22.02.84 FR 8402647**

(43) Date de publication de la demande:
**02.10.85 Bulletin 85/40**

(45) Mention de la délivrance du brevet:
**03.02.88 Bulletin 88/5**

(84) Etats contractants désignés:
**DE GB NL**

(56) Documents cité:
**DE-C-432 405**
**DE-C-956 911**

(73) Titulaire: **ETAT- FRANCAIS représenté par le DELEGUE GENERAL POUR L'ARMEMENT, Bureau des Brevets et Inventions de la Délégation Générale pour l'Armement 26, Boulevard Victor, F-75996 Paris Armées (FR)**

(72) Inventeur: **Giovachini, Jean- Luc, 4, Place de Breteuil, F-75015 Paris (FR)**
Inventeur: **Varnier, Jean- Paul, 20, Promenade Mona Lisa, F-78000 Versailles (FR)**
Inventeur: **Dern, Jean- Claude, 187, rue de Javel, F-75015 Paris (FR)**
Inventeur: **Le Guet, Pierre Loïc, 15, avenue de la Mutualité, F-91440 Bures Sur Yvette (FR)**
Inventeur: **Pascal, Jean- Pierre, 27, rue des Meuniers, F-75012 Paris (FR)**

EP 0 156 661 B1

## Description

La présente invention concerne un dispositif d'essais hydrodynamiques.

De même qu'il existe des souffleries permettant de procéder à des essais aérodynamiques pour des engins terrestres ou aériens, il existe des dispositifs d'essais hydrodynamiques pour l'étude du comportement de mobiles partiellement ou totalement immergés.

Certains de ces dispositifs comportent un tunnel délimitant une veine de liquide mise en mouvement par des moyens appropriés. Toutefois, une différence importante doit exister entre le diamètre de la veine de liquide et le maître-couple de la maquette, faute de quoi les mesures sont perturbées par les parois dont la présence modifie l'écoulement de l'eau dans la veine. Pour obtenir cette grande différence, on peut prévoir des veines de grande dimension, mais de telles veines sont très difficiles à mettre en oeuvre, en particulier pour assurer une régularité de l'écoulement sur toute la section de la veine. De plus, ces installations supposent la mise en mouvement de quantités d'eau très importantes et sont donc très onéreuses. Il est également possible d'utiliser une maquette de dimensions très réduites mais on obtient alors une similitude généralement médiocre de sorte que les essais ne sont pas véritablement utiles pour une exploitation pratique.

On a alors envisagé des installations d'essais, en particulier pour les carènes navales, ou la maquette est montée sur un support, généralement un pont roulant, qui se déplace au-dessus d'un bassin à eau dormante. Le document DE-C-956 911 présente une telle installation. Un dispositif de ce type est très satisfaisant pour procéder aux essais de maquettes de mobiles présentant une partie immergée et une partie émergée. Dans ce cas, il est en effet possible de fixer la maquette à son support par la partie émergée et le déplacement du support n'entraîne aucune perturbation autour de la partie immergée qui est la seule considérée pour les essais.

Ces dispositifs présentent toutefois des inconvénients dans le cas d'une étude sur une maquette totalement immergée, comme par exemple une maquette de sous-marin ou une maquette d'engin remorqué comme une bouée. En effet, le support doit présenter une rigidité suffisante pour ne pas entrer en oscillation ou vibrations sous l'effet de l'écoulement de l'eau, mais une telle rigidité suppose un volume relativement important du support qui perturbe le champ des vitesses autour de la maquette, d'une part en raison du volume d'eau déplacé et d'autre part en raison des perturbations créées au niveau où le support traverse la surface du liquide.

Devant ces difficultés et considérant que les maquettes d'étude présentent souvent un plan de symétrie que ne traverse aucune composante des vecteurs de vitesse, on a considéré qu'une similitude satisfaisante serait obtenue en déplaçant une demi-maquette coupée selon un plan de symétrie et maintenue sur une plaque sensiblement parallèle au fond du bassin. Le document DE-C-432 405 décrit un tel dispositif. Il s'est toutefois avéré très difficile de déplacer régulièrement une plate-forme immergée dont la résistance à l'avancement est très élevée et est modulée par l'influence de la houle simulée dans le bassin.

En particulier, l'entraînement d'un chariot par un câble s'est avéré inefficace en raison de l'élasticité des câbles de petites dimensions et de la trop grande perturbation résultant de câbles de gros diamètres. Il s'est également avéré impossible de déplacer un chariot porteur d'une plate-forme par des galets entraînés par un moteur en raison du glissement des galets sur le fond du bassin ou sur les rails leur servant d'appui. Enfin, il a été envisagé d'entraîner une plate-forme immergée par des moteurs électriques alimentés par des batteries à la façon d'une torpille ; une structure de ce type ne s'est pas révélée satisfaisante en raison de la faible autonomie des batteries et de leur encombrement important entraînant des perturbations de l'écoulement au voisinage de la maquette.

Un but de la présente invention est donc de proposer un dispositif d'essais hydrodynamiques permettant le déplacement d'une maquette immergée avec une régularité suffisante et minimisant les perturbations de l'écoulement relatif autour de la maquette.

Suivant l'invention, le dispositif d'essais hydrodynamiques comporte un bassin rempli d'eau dans lequel est plongé un support de maquette d'essais et est caractérisé en ce que le support comporte un châssis équipé de galets de roulement prenant appui sur le fond du bassin, une platine amovible fixée sur le dessus du châssis, et un moteur linéaire fixé sur chaque côté du châssis et alimenté par des rails conducteurs fixés dans le fond du bassin.

De façon tout-à-fait inattendue, il s'est en effet avéré possible d'entrainer un châssis dans le fond d'un bassin rempli d'eau par un moteur linéaire et d'obtenir ainsi un entraînement extrêmement régulier du châssis, la platine amovible permettant de réaliser à l'extérieur du bassin les câblages nécessaires sur la maquette et de monter celle-ci de façon aisée sur le châssis.

Selon une version avantageuse de l'invention, le châssis comprend des longerons en caisson reliés par des poutres transversales. Ainsi, les longerons reçoivent les accessoires nécessaires pour la mise en place de la platine ou le fonctionnement de la plate-forme immergée tout en gardant à celle-ci son caractère compact entraînant de faibles perturbations de l'écoulement autour de la maquette.

Selon d'autres aspects avantageux de l'invention : les poutres transversales ont la même epaisseur que la platine ; les poutres transversales et la platine réalisent ainsi un plan presque continu favorisant un bon écoulement de l'eau autour de la maquette. La platine comporte une ouverture centrale, il est ainsi possible de mettre en place certains instruments de mesure dans l'épaisseur de la platine ou même de les faire dépasser sous celle-ci.

D'autres caractéristiques et avantages de l'invention résulteront encore de la description ci-après d'un exemple non limitatif, en référence aux dessins annexés dans lesquels :

- la figure 1 est une vue partielle de dessus d'un dispositif selon l'invention,

- la figure 2 est une vue en coupe partielle agrandie selon le plan II-II de la figure 1,

- la figure 3 est une vue partielle en coupe agrandie, selon le plan III-III de la figure 1,

- la figure 4 est une vue partielle en coupe agrandie, selon le plan IV-IV de la figure 1,

- la figure 5 est une vue en coupe agrandie d'un rail d'alimentation.

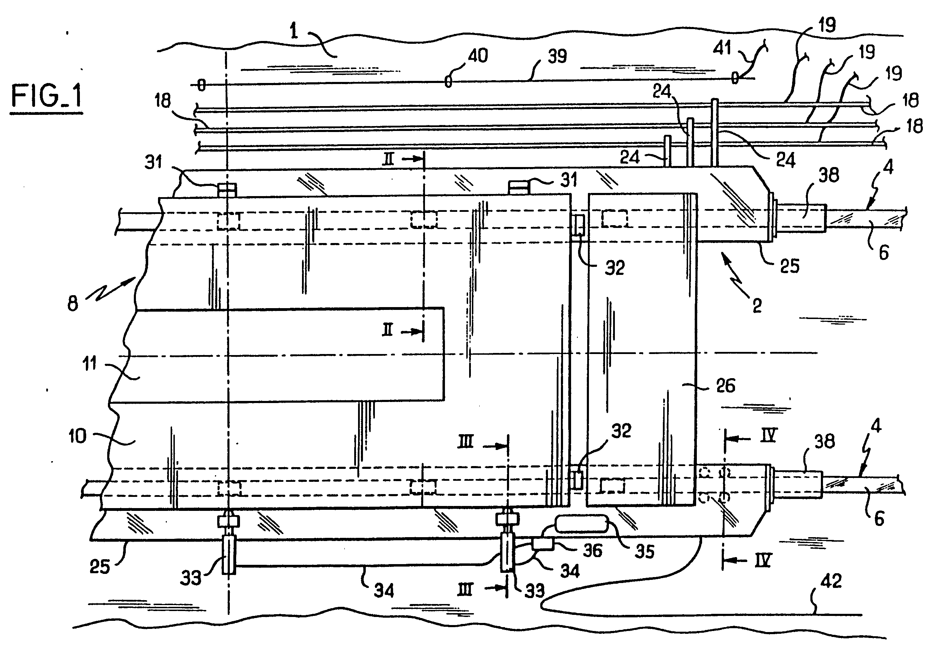

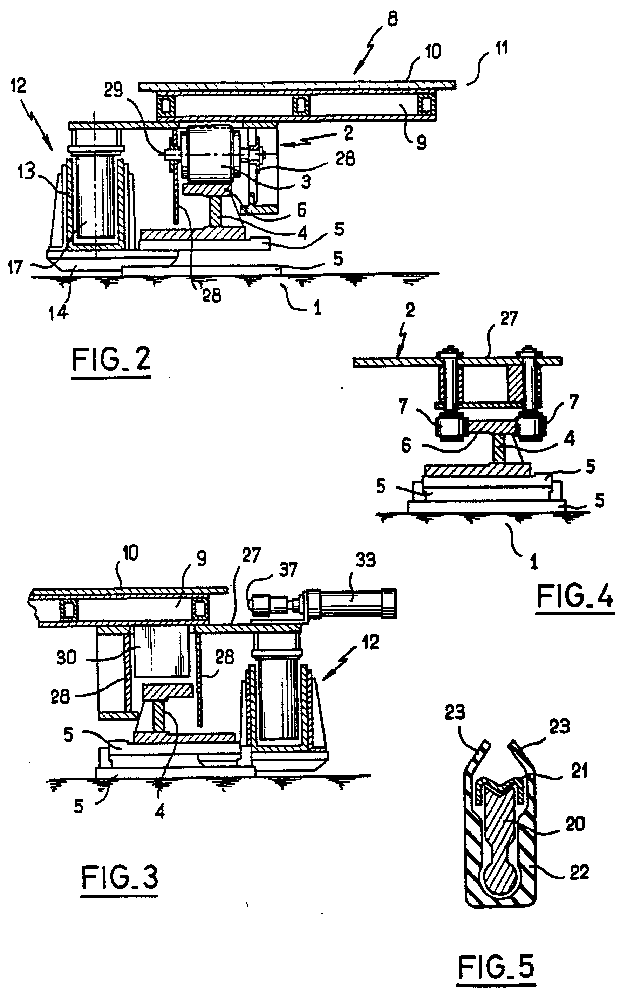

En référence aux dessins, le dispositif selon l'invention comprend un bassin dont on a représenté seulement une partie du fond 1. A titre d'exemple, un dispositif selon l'invention a été réalisé avec un bassin rectangulaire de 220 mètres de long, de 13 mètres de large et de 4 mètres de profondeur. Le dispositif comprend également un support de maquette d'essais, comportant un châssis généralement désigné en 2, équipé de galets de roulement 3 (figure 2) prenant appui sur le fond 1 du bassin. Dans le cas représenté, les galets 3 prennent appui sur le fond 1 du bassin, par l'intermédiaire de rails 4 supportés sur le fond 1 du bassin par des plaques de réglage 5 et comportant un champignon plat 6 sur le quel s'appuient les galets 3. Le champignon 6 de l'un des rails 4 (celui de droite sur la figure 1) a des faces latérales usinées pour permettre le guidage par des galets verticaux 7 montés sur le châssis 2 de part et d'autre du rail 4 (figure 4).

Une platine amovible 8 destinée à recevoir une maquette est fixée sur le dessus du châssis 2. Cette platine comprend de préférence un caisson épais, renforcé 9 réalisant un cadre tubulaire sur lequel est fixé un plateau 10. Les maquettes d'essais et les instruments (par exemple des balances de mesure des efforts) sont fixés sur le plateau 10. A titre d'exemple, une platine a été réalisée ayant une longueur de 5 mètres, une largeur de 2,33 mètres et une épaisseur de 10 cm. La platine 8 comporte une ouverture centrale 11 qui permet de loger certains instruments de mesure dans l'épaisseur de la platine ou en les faisant légèrement dépasser en dessous de la platine, de sorte qu'ils ne perturbent pas l'écoulement autour de la partie de maquette tournée vers la surface et sur laquelle les mesures sont effectuées.

Un moteur linéaire 12 s'étend de chaque côté du châssis 2. Ces moteurs linéaires 12 comprennent un rail induit 13 fixé par des attaches 14 insérées à des intervalles réguliers entre deux plaques de réglage 5 supportant le rail 4. Chaque rail 13 comporte une structure support en acier, en forme de U protégée contre la corrosion par un revêtement approprié, par exemple une couche de polyamide.

L'induit proprement dit est constitué d'une feuille de cuivre pliée en U et insérée dans le support en acier . Un inducteur 17 est fixé au châssis 2 et s'étend dans l'induit 13.

Dans la realisation préférée qui a été mise en oeuvre, on a utilisé quatre moteurs de type asynchrone à 7 pôles (système Guimbal) connectés en parallèle, montés de chaque côté du châssis 2, deux moteurs jointifs étant disposés sur chaque côté et réalisant un ensemble de 14 pôles consécutifs alimentés sous une tension triphasée de 0 à 80 volts entre phases et un courant de 0 à 600 ampères des rails conducteurs 18 fixés dans le fond 1 du bassin, et reliés à une alimentation extérieure au bassin par des câbles 19.

Les rails conducteurs 18 sont de préférence des rails analogues à ceux utilisés pour l'alimentation des trolleys et comportant (figure 5) une âme conductrice en aluminium 20 sur laquelle est serti un profil de contact 21 protégeant l'âme conductrice 20 de l'usure résultant du frottement des balais collecteurs (non représentés), l'ensemble étant protégé par une peinture (hors zone de frottement) et recouvert d'une enveloppe en caoutchouc 22 comportant des lèvres 23 tournées vers le haut qui s'écartent lors du passage du balai collecteur. Les balais collecteurs en contact avec les rails conducteurs 18 sont supportés par des potences 24 montées sur un côté du châssis 2. La régulation du moteur connue en elle-même, est effectuée à partir d'un capteur de vitesse disposé dans des caissons du châssis 2 et est commandée à partir d'un pupitre extérieur au bassin raccordé à la plateforme immergée par un câble 42 qui sert également à la transmission vers l'extérieur du bassin des données résultant des capteurs disposés sur la maquette.

Le châssis 2 comprend des longerons en caisson 25 reliés entre eux au voisinage de leurs extrémités par des poutres tranversales 26. Les longerons en caisson 25 ont de préférence une structure en U inversé et comportent une plaque supérieure 27 et deux plaques latérales 28 (figures 2 et 3) s'étendant de part et d'autre des rails 4 et servant de support et de carénage pour les galets 3 montés sur des axes 29 traversant les parois latérales 28. Entre deux galets 3, la paroi supérieure 27 du châssis 2 est percée d'une ouverture permettant l'insertion entre les parois latérales 28 d'un caisson étanche 30, solidaire de la platine 8 (figure 3) et contenant les dispositifs électroniques assurant une préamplification des données en provenance des capteurs portés par la platine 8.

Les poutres transversales 26 ont de préférence la même structure et la même épaisseur que la platine 8 afin de réaliser une perturbation minimale de l'écoulement lors des déplacements de la plate-forme.

Selon une version avantageuse, la platine 8 est fixée sur le dessus du châssis 2 au moyen de butées latérales, transversales 31 et de butées latérales longitudinales 32 contre lesquelles la platine est maintenue appuyée par des vérins pneumatiques transversaux 33 disposés en regard des butées 31 et des vérins pneumatiques longitudinaux (non représentés) disposés en regard des butées 32. Les vérins pneumatiques 33 sont montés sur la plaque supérieure 27 du châssis 2 et sont reliés par des canalisations 34 à des bouteilles d'air comprimé 35 par l'intermédiaire d'un boîtier de commande 36 recevant des impulsions de commande par le câble 42. Pour la clarté de l'exposé, les canalisations 34, la bouteille d'air comprimé 35 et le boîtier de commande 36 ont été représentés de façon visible sur la figure 1, mais il est clair que ces éléments sont de préférence insérés dans des caissons formés par les parois latérales 28 du châssis 2. A leur extrémité, les tiges des vérins pneumatiques 33 comportent de préférence une sphère 37 (figure 3) montée pour tourner librement dans l'extrémité de la tige, de sorte que lorsque la tige du vérin 33 est en prise avec la surface latérale du caisson renforcé 9 de la platine 8, un mouvement de positionnement peut être effectué dans une direction transversale par l'autre série de vérins pneumatiques. A ses extrémités, le châssis 2 comporte des tampons de sécurité 38 destinés à coopérer avec des butoirs (non représentés) prévus aux extrémités des rails 4 pour arrêter la plate-forme en cas de défaillance du système de commande du moteur linéaire 12.

La plate-forme immergée comporte des métaux extrêmement différents tels que le cuivre, l'acier inoxydable, l'aluminium et il est généralement nécessaire de protéger ces métaux contre la corrosion. Un revêtement protecteur est utilisé chaque fois que cela est possible, mais certaines parties ne peuvent être recouvertes. Pour éviter une corrosion trop rapide, on a prévu selon l'invention de disposer dans le fond du bassin des moyens anticorrosion comprenant au moins un câble en acier inoxydable 39 supporté par les éléments isolants 40 et alimenté par un conducteur 41 relié à une source basse tension continue (par exemple 5 ou 6 volts).

Pour l'utilisation du dispositif selon l'invention, le châssis 2 est mis en place dans le fond du bassin, puis la platine 8 équipée de la maquette et des instruments de mesure est disposée sur le châssis 2 et bloquée sur celui-ci par la commande des vérins transversaux et longitudinaux. Les rails conducteurs 18 sont alors alimentés en électricité. A ce propos, on notera qu'il est bien entendu nécessaire d'alimenter les rails conducteurs 18 avec un courant supérieur à celui qui est nécessaire pour le moteur linéaire, en raison des pertes par conduction dans l'eau. De façon tout-à-fait surprenante, il a toutefois été constaté qu'un fonctionnement précis du moteur linéaire était obtenu dans des conditions d'immersion totale. La plate-forme étant mise en place et alimentée, elle se déplace sur les rails 4 et les essais se déroulent en fonction des instructions transmises par le câble 42.

De nombreuses applications sont possibles, on peut citer en particulier l'étude expérimentale du remorquage de corps immergés, semi-immergés, en surface (bouées, antennes linéaires, sonars) à partir de la plate-forme immergée, les catapultages et l'éjection de corps sous l'eau (torpilles, engins amphibies) ; l'étude expérimentale de problèmes hydrobalistiques, la simutation de certains écoulements aérodynamiques dans lesquels l'air étant remplacé par de l'eau, le nombre de Reynolds se trouve augmenté ; la simulation de courants pour les essais de structures en mer.

Bien entendu, l'invention n'est pas limitée au mode de réalisation décrit ci-dessus et on peut y apporter des variantes d'exécution.

Ainsi, on prévoit des carénages complémentaires pour améliorer encore les conditions d'écoulement autour de la plate-forme lors de son déplacement.

On peut également prévoir que la platine 8 soit solidaire du châssis 2. Il est dans ce cas nécessaire d'extraire l'ensemble de la plate-forme du bassin pour procéder à un changement de maquette.

**Revendications**

1. Dispositif d'essais hydrodynamiques comportant un bassin rempli d'eau dans lequel est plongé un support de maquette d'essais, caractrérisé en ce que le support comporte un châssis (2) équipé de galets de roulements (3) prenant appui sur le fond (1) du bassin, une platine amovible (8) fixée sur le dessus du châssis (2) et un moteur linéaire (12) fixé sur chaque côté du châssis (2) et alimenté par des rails conducteurs (18) fixés dans le fond (1) du bassin.

2. Dispositif conforme à la revendication 1, caractérisé en ce que le châssis (2) comprend des longerons (25) en caissons reliés par des poutres transversales (26).

3. Dispositif conforme à la revendication 2, caractérisé en ce que les poutres transversales (26) ont la même épaisseur que la platine (8).

4. Dispositif conforme à l'une quelconque des revendications 1 à 3, caractérisé en ce que la platine (8) comporte une ouverture centrale (11).

5. Dispositif conforme à l'une quelconque des revendications 1 à 4, caractérisé en ce que la platine (8) est fixée sur le dessus du châssis (2) au moyen de butées (31, 32) latérales contre lesquelles la platine est maintenue appuyée par des vérins pneumatiques (33).

6. Dispositif conforme à l'une quelconque des revendications 1 à 5, caractérisé en ce qu'il comporte des moyens anticorrosion comprenant au moins un câble (39) disposé à proximité des rails conducteurs (18) et relié à une source basse tension continue.

## Patentansprüche

1. Schleppwagen für Schiffsmodelle mit einem mit Wasser gefüllten Becken, in das ein Versuchsmodell eingetaucht wird, dadurch gekennzeichnet, daß die Schiene einen Wagen (2) mit Führungsrollen (3) umfaßt, die sich auf dem Beckenboden (1) abstützen, eine abnehmbare Platine (8), die auf dem oberen Wagenteil befestigt ist (2) und ein Reihenmotor (12), der auf jeder Wagenseite (2) befestigt ist und von den Laufschienen (18) gespeist wird, die auf dem Beckenboden (1) befestigt sind.

2. Schleppwagen nach Anspruch 1, dadurch gekennzeichnet, daß der Wagen (2) Holms (25) in Kästen enthält, die durch Querbalken (26) verbunden sind.

3. Schleppwagen nach Anspruch 2, dadurch gekennzeichnet, daß die Querbalken (26) die gleiche Dicke wie die Platine (8) haben.

4. Schleppwagen nach Anspruch 1 bis 3, dadurch gekennzeichnet, daß die Platine (8) eine Mittenöffnung (11) hat.

5. Schleppwagen nach Anspruch 1 bis 4, dadurch gekennzeichnet, daß die Platine (8) auf dem oberen Wagenteil (2) mittels seitlichen Führungen (31, 32) befestigt ist, gegen die die Platine mit Druckluftzylindern (33) gedrückt gehalten wird.

6. Schleppwagen nach Anspruch 1 bis 5, dadurch gekennzeichnet, daß er Rostschutzvorrichtungen enthält, die mindestens ein Kabel (39) enthalten, das in der Nähe der Führungsschienen (18) angeordnet und an eine Niedergleichspannungsquelle angeschlossen ist.

## Claims

1. Hydrodynamic test device comprising a tank filled with water in which a test model support is immersed, caracterised by the fact it includes a frame (2) having rollers (3) resting on the bottom (1) of said tank, a removable plate (8) attached to said frame, and a linear induction motor (12) attached to each side of frame (2) and being supplied with electric current form conductor rails affixed to the bottom (1) of said tank.

2. Device according to claim 1, caracterised in that said frame (2) comprises caisson-type side members (25) connected by crossbars (26).

3. Device according to claim 2, wherein said crossbars (26) are of the same thickness as said removable plate (8).

4. Device according to anyone of claims 1 to 3 wherein said removable plate (8) has a central opening (11).

5. Device according to anyone of claims 1 to 4 wherein said removable plate (8) is attached above to said frame (2) by means of lateral abutments (31, 32) against which said plate is held by pneumatic jacks (33).

6. Device according to any of claims 1 to 5 caracterised by the fact it comprises corrosion equipment comprising at least one cable (32) placed near said conductor rails (18) and connected to a source of low voltage direct current.

FIG_1

FIG.2

FIG.3

FIG.4

FIG.5